# EUROPÄISCHE PATENTANMELDUNG

(11) **EP 3 213 885 A1**
(43) Veröffentlichungstag der Anmeldung: **06.09.2017**
(21) Anmeldenummer: 17000112.7
(22) Anmeldetag: 23.01.2017
(51) Int. Cl.: B25J 15/00, B25J 17/02, B62D 65/06

(54) **HANDHABUNGSEINRICHTUNG FÜR EINE ROBOTERVORRICHTUNG, MONTAGESTATION MIT DER HANDHABUNGSEINRICHTUNG UND VERFAHREN ZUR MONTAGE EINER FAHRZEUGSCHEIBE AN EINEM KAROSSERIEABSCHNITT MIT DER HANDHABUNGSEINRICHTUNG**

(30) Priorität: 03.03.2016 DE 102016002489
(71) Anmelder: GM Global Technology Operations LLC, Detroit, MI 48265-3000 (US)
(72) Erfinder: KRETZSCHMAR, Claudia, 65428 Ruesselsheim (DE); SCHENK, Harald, 65428 Ruesselsheim (DE); APOLD, Judith, 65428 Ruesselsheim (DE)
(74) Vertreter: Nettinger, Manuela Gertrud

(57) **Zusammenfassung**

Handhabungseinrichtung 1 für eine Robotervorrichtung 2 zur Montage einer Fahrzeugscheibe 17 an einen Karosserieabschnitt 4 einer Fahrzeugkarosserie 5 in einer Montagestation 6, wobei die Handhabungseinrichtung 1 eine Schnittstelle 7 zur Kopplung der Handhabungseinrichtung 1 mit der Robotervorrichtung 2 aufweist, wobei die Handhabungseinrichtung 1 eine Halteeinrichtung 8 zum Halten der Fahrzeugscheibe 17 in einer Scheibenebene E aufweist, wobei die Handhabungseinrichtung 1 eine Xr-Linearachse 9 und eine Y-Linearachse 11 aufweist, wobei die Halteeinrichtung 8 in einem ersten translatorischen Freiheitsgrad entlang der Xr-Linearachse 9 in eine Xr-Richtung Xr relativ zur Schnittstelle 7 und parallel zur Scheibenebene E bewegbar ist und wobei die Halteeinrichtung 8 in einem zweiten translatorischen Freiheitsgrad entlang der Y-Linearachse 11 in eine Y-Richtung Y relativ zur Schnittstelle 7 und parallel zur Scheibenebene E bewegbar ist.

## Beschreibung

### Technisches Gebiet:

Die Erfindung betrifft eine Handhabungseinrichtung für eine Robotervorrichtung zur Montage einer Fahrzeugscheibe an einem Karosserieabschnitt einer Fahrzeugkarosserie mit den Merkmalen des Anspruchs 1. Die Erfindung betrifft weiterhin eine Montagestation mit der Handhabungseinrichtung mit den Merkmalen des Anspruchs 11 und ein Verfahren zur Montage einer Fahrzeugscheibe an einem Karosserieabschnitt einer Fahrzeugkarosserie in einer Montagestation mit der Handhabungseinrichtung mit den Merkmalen des Anspruchs 14.

### Hintergrund:

Üblicherweise werden Fahrzeugteile mit einer manuell geführten Handhabungsvorrichtung durch einen Werker von einer Bereitstellungsfläche oder Applikationzelle zu einer Montageposition bewegt. Bekannt ist aber auch, dass die Fahrzeugteile durch Roboter vollautomatisch von der Bereitstellungsfläche oder Applikationszelle zu der Montageposition bewegt werden. Der Werker endpositioniert und feinjustiert das Fahrzeugteil anschließend in der Montageposition mit einer Handhabungseinrichtung.

Beispielsweise beschreibt die Druckschrift DE 10 2014 002 722 A1, die wohl den nächstliegenden Stand der Technik bildet, ein Verfahren zur Montage eines Fahrzeugteils an einer Fahrzeugkarosserie in einer Montagestation. Bei dem Verfahren wird eine Handhabungsvorrichtung verwendet, die eine Robotereinrichtung, eine Greifereinrichtung und eine Endpositioniereinrichtung aufweist. Die Handhabungsvorrichtung greift das Fahrzeugteil mit der Greifereinrichtung in einer Übergabeposition und positioniert das Fahrzeugteil mit der Endpositioniereinrichtung in einer Montageposition vor. Dort montiert der Werker mit der Endpositioniereinrichtung das Fahrzeugteil an der Fahrzeugkarosserie.

### Beschreibung:

Der Erfindung liegt die Aufgabe zugrunde, eine funktional verbesserte Handhabungseinrichtung zur Endmontage bereitzustellen. Diese Aufgabe wird durch eine Handhabungsvorrichtung mit den Merkmalen des Anspruchs 1, durch eine Montagestation mit den Merkmalen des Anspruchs 11 und durch ein Verfahren zur Montage einer Fahrzeugscheibe an einem Karosserieabschnitt einer Fahrzeugkarosserie in einer Montagestation mit der Handhabungseinrichtung mit den Merkmalen des Anspruchs 14 gelöst. Bevorzugte oder vorteilhafte Ausführungsformen der Erfindung ergeben sich aus den Unteransprüchen, der nachfolgenden Beschreibung und/oder den beigefügten Figuren.

Es wird eine Handhabungseinrichtung für eine Robotervorrichtung zur Montage einer Fahrzeugscheibe auf einem Karosserieabschnitt einer Fahrzeugkarosserie in einer Montagestation bereitgestellt. Beispielsweise ist die Robotervorrichtung als ein kartesischer Roboter oder als ein Knickarmroboter ausgebildet.

Die Handhabungseinrichtung weist eine Schnittstelle auf, die zur Kopplung der Handhabungseinrichtung mit der Robotervorrichtung ausgebildet ist. Dadurch ist die Handhabungseinrichtung in einem mit der Robotervorrichtung gekoppelten Zustand in der Montagestation bewegbar. Vorzugsweise ist die Handhabungseinrichtung dazu ausgebildet, von einem Werker geführt und/oder gehandhabt zu werden. Mit Unterstützung der Handhabungsvorrichtung kann der Werker die Fahrzeugscheibe greifen, halten und zum Karosserieabschnitt bewegen. Insbesondere unterstützt die Handhabungseinrichtung den Werker bei der Vormontage und optional ergänzend sogar bei der Endmontage der Fahrzeugscheibe am Karosserieabschnitt. Bei der Fahrzeugkarosserie handelt es sich vorzugsweise um eine Fahrzeugkarosserie eines Pkws. Der Karosserieabschnitt bildet insbesondere einen Abschnitt der Fahrzeugkarosserie im Bereich der Front- und/oder Heckscheibe. Vorzugsweise ist die Fahrzeugscheibe als eine Front- oder Heckscheibe zur Montage an dem Karosserieabschnitt der Fahrzeugkarosserie ausgebildet.

Im Rahmen der Erfindung ist es bevorzugt, dass die Fahrzeugkarosserie innerhalb der Montagestation zu einem Fahrzeug fertiggestellt wird, das für den Straßenverkehr einsatzfähig ist. Optional wird die Fahrzeugkarosserie auf einer Fertigungslinie der Montagestation, z.B. auf einem Transport- und/oder Förderband, über einen Automaten und/oder über die Robotervorrichtung in die Montagestation und/oder durch die Montagestation befördert. Möglich ist im Rahmen der Erfindung, dass die Fertigungslinie zur Montage der Fahrzeugscheibe an dem Karosserieabschnitt stoppt und dann wieder anfährt. Insbesondere steht die Fahrzeugkarosserie in diesem Fall bei einer Vor- und/oder Endmontage der Fahrzeugscheibe am Karosserieabschnitt still. Es ist jedoch besonders bevorzugt, dass die Fahrzeugscheibe im Rahmen einer Fließfertigung, bei der die Fertigungslinie insbesondere nicht stoppt, am Karosserieabschnitt montiert wird. Die Beförderung der Fahrzeugkarosserie erfolgt in dieser bevorzugten Ausführungsform stetig, ohne Unterbrechung und/oder ohne Anzuhalten.

Die Handhabungseinrichtung weist eine Halteeinrichtung auf, die zum Halten der Fahrzeugscheibe in einer Scheibenebene, insbesondere in einer durch die Fahrzeugscheibe definierten Scheibenebene, ausgebildet ist. Beispielsweise umfasst die Halteeinrichtung mindestens eine Greifereinrichtung, mit der die Fahrzeugscheibe gegriffen und gehalten werden kann. Beispielsweise ist die mindestens eine Greifereinrichtung als mindestens ein Saugnapf ausgebildet. Insbesondere entsteht bei einem Aufsetzten des mindestens einen Saugnapfes zwischen der Fahrzeugscheibe und dem Saugnapf ein Vakuum, durch das die Fahrzeugscheibe am Saugnapf befestigt ist.

Vorzugsweise ist die gegriffene und gehaltene Fahrzeugscheibe mit der Handhabungseinrichtung, insbesondere durch den Werker, zur Vor- und/oder Endmontage bewegbar. Optional weist die Handhabungseinrichtung eine Kompensierungseinrichtung auf, die zur Kompensierung eines Gewichts der Fahrzeugscheibe ausgebildet ist. Die Kompensierungseinrichtung ist z.B. als mindestens ein Zylinder ausgebildet, der beispielsweise ein Gegengewicht zur Fahrzeugscheibe erzeugen kann. Dadurch kann ein Gewicht der Fahrzeugscheibe kompensiert werden, was insbesondere für den Werker von Vorteil ist, da er diese mit einem geringeren Kraftaufwand leichter mit der Handhabungseinrichtung bewegen kann.

Die Handhabungseinrichtung weist eine XR-Linearachse und eine Y-Linearachse auf. In einem ersten translatorischen Freiheitsgrad ist die Halteeinrichtung entlang der XR-Linearachse in eine XR-Richtung bewegbar. Die Bewegung in die XR-Richtung erfolgt relativ zur Schnittstelle und parallel zur Scheibenebene.

In einem zweiten translatorischen Freiheitsgrad ist die Halteeinrichtung entlang der Y-Linearachse in eine Y-Richtung bewegbar. Die Bewegung in die Y-Richtung erfolgt relativ zur Schnittstelle und parallel zur Scheibenebene.

Vorteilhaft ist, dass aufgrund der möglichen Bewegung der Halteeinrichtung in die XR-Richtung und in die Y-Richtung eine Handhabung der Handhabungseinrichtung für den Werker bei der Vor- und/oder Endmontage der Fahrzeugscheibe am Karosserieabschnitt in ergonomischer Hinsicht verbessert werden kann. Insbesondere kann die Fahrzeugscheibe durch die Möglichkeit der Bewegung der Halteeinrichtung in die XR- und Y-Richtung relativ zur Schnittstelle und parallel zur Scheibenebene einfacher, genauer und schneller endpositioniert und sogar feinjustiert werden. Dadurch kann in vorteilhafter Weise Arbeitszeit bei der Vor- und/oder Endmontage der Fahrzeugscheibe am Karosserieabschnitt eingespart werden.

Optional verwendet der Werker zur Endmontage und/oder Feinjustierung der Fahrzeugscheibe am Karosserieabschnitt mindestens einen Abstandshalter und/oder mindestens eine Messlehre.

In einer bevorzugten Ausführungsform der Erfindung ist die Halteeinrichtung an der Xr-Linearachse angeordnet und durch diese bewegbar. Vorzugsweise weist die Xr-Linearachse ein erstes Verschiebepaar auf. Insbesondere umfasst das erste Verschiebepaar eine erste Führungsschiene und einen ersten Wagen, der auf der Führungsschiene in die Xr-Richtung verschiebbar ist. Besonders bevorzugt ist, dass die Halteeinrichtung am ersten Wagen angeordnet ist und dadurch in die Xr-Richtung bewegbar ist.

Optional ergänzend weist die Y-Linearachse ein zweites Verschiebepaar mit einer zweiten Führungsschiene und einem zweiten auf der Führungsschiene verschiebbaren Wagen auf. Insbesondere ist der zweite Wagen auf der zweiten Führungsschiene in die Y-Richtung verschiebbar.

In einer besonders bevorzugten Umsetzung der Erfindung steht die Xr-Linearachse in einer kinematischen Kette mit der Y-Linearachse. Dadurch ist die Xr-Linearachse über die Y-Linearachse in die Y-Richtung bewegbar. Beispielsweise ist die erste Führungsschiene hierfür am zweiten Wagen angeordnet. Dadurch ist die Halteeinrichtung gemeinsam mit der Xr-Linearachse relativ zur Schnittstelle und parallel zur Scheibenebene in Y-Richtung bewegbar.

Eine besonders bevorzugte Ausgestaltung der Erfindung sieht vor, dass die Y-Linearachse als eine Y-Linear-Rotationsachse ausgebildet ist. Vorzugsweise ist die Y-Linear-Rotationsachse in einem rotatorischen Freiheitsgrad in einer Yrot-Richtung rotierbar. Besonders bevorzugt ist, dass die Xr-Linearachse in einer kinematischen Kette mit der Y-Linear-Rotationsachse angeordnet ist. Dadurch ist die Xr-Linearachse in die Yrot-Richtung rotierbar. Optional ergänzend ist die Halteeinrichtung, insbesondere gemeinsam mit der Xr-Linearachse, in um die Y-Linear-Rotationsachse in die Yrot-Richtung rotierbar. Durch die Möglichkeit der Rotation um die Y-Linear-Rotationsachse wird in vorteilhafter Weise erreicht, dass die Fahrzeugscheibe entsprechend verschiedener Einbauwinkel unterschiedlicher Fahrzeugkarosserietypen positioniert und ausgerichtet werden kann. Dies kann entweder automatisch angesteuert werden oder manuell durch einen Werker bei der Montage der Fahrzeugscheibe eingestellt werden. Dadurch kann die Montage flexibel auch bei unterschiedlichen Fahrzeugkarosserietypen erfolgen.

In einer bevorzugten Ausführungsform der Erfindung weist die Handhabungseinrichtung eine X-Linearachse mit einem dritten Verschiebepaar auf. Vorzugsweise umfasst das dritte Verschiebepaar eine dritte Führungsschiene und einen dritten Wagen, der auf der Führungsschiene in eine X-Richtung verschiebbar ist.

Im Rahmen der Erfindung ist es besonders bevorzugt, dass die Y-Linearachse und/oder die Y-Linear-Rotationsachse mit der X-Linearachse in einer kinematischen Kette verbunden ist. Vorzugsweise ist die Y-Linearachse und/oder die Y-Linear-Rotationsachse an dem dritten Wagen des dritten Verschiebepaars angeordnet. Dadurch ist die Y-Linearachse und/oder die Y-Linear-Rotationsachse in die X-Richtung bewegbar. Optional ergänzend ist die Halteeinrichtung in einem dritten translatorischen Freiheitsgrad entlang der X-Linearachse in die X-Richtung relativ zur Schnittstelle bewegbar. Insbesondere ist die Handhabungseinrichtung in der X-Richtung frei gelagert. Dadurch können Bewegungen oder Nachlaufwege bei einem Stopp in der Fertigungslinie ausgeglichen werden. Dies ist insbesondere für die Montage der Fahrzeugscheibe im Rahmen der Fließfertigung von großem Vorteil.

Eine bevorzugte konstruktive Umsetzung der Erfindung sieht vor, dass die Y-Linearachse und/oder die Y-Linear-Rotationsachse in einer Draufsicht von oben auf die Handhabungseinrichtung rechtwinklig oder senkrecht zur X-Linearachse verläuft. Vorzugsweise verläuft die Xr-Linearachse in der Draufsicht von oben in Abhängigkeit von einem Rotationsgrad um die Y-Linear-Rotationsachse winklig oder gleichgerichtet zur X-Linearachse.

Ein weiterer Gegenstand der Erfindung betrifft eine Montagestation mit der Handhabungseinrichtung nach einem der Ansprüche 1 - 10 und/oder nach der bisherigen Beschreibung. Die Montagestation weist die Handhabungseinrichtung auf. Optional ergänzend umfasst die Montagestation die Robotervorrichtung, die Fahrzeugkarosserie, und/oder die Fahrzeugscheibe.

In einer bevorzugten Ausgestaltung ist die Handhabungseinrichtung über die Schnittstelle an der Robotervorrichtung gekoppelt und nimmt einen gekoppelten Zustand ein. Im gekoppelten Zustand ist die Handhabungseinrichtung als ein Werkzeug auf die Robotereinrichtung aufgesetzt. Somit kann die Handhabungseinrichtung von der Robotervorrichtung bewegt und/oder geführt werden.

Im Rahmen der Erfindung ist es besonders bevorzugt, dass die Robotervorrichtung von einem aktiven Zustand, in dem die Robotervorrichtung beweglich gesetzt ist, in einen gesicherten Zustand, in dem er geschwindigkeitsreduziert oder sogar bewegungsunfähig gesetzt ist, überführbar. Beispielsweise kann die Robotervorrichtung die Handhabungseinrichtung im aktiven Zustand mit sich führen. Insbesondere ist die Robotereinrichtung im gesicherten Zustand in der Bewegungsgeschwindigkeit reduziert oder sicherheitsabgeschaltet. Die Sicherheitsabschaltung kann zum Beispiel durch eine Stromlossetzung der Robotereinrichtung erfolgen. Möglich im Rahmen der Erfindung ist auch, dass die Robotereinrichtung im gesicherten Zustand bremsgesperrt und/oder unbewegbar ist.

Vorzugsweise umfasst die Montagestation die Fertigungslinie, auf der die Fahrzeugkarosserie angeordnet ist. Insbesondere wird die Fahrzeugkarosserie in einer Verfahrrichtung durch die Montagestation befördert.

In einer bevorzugten Ausgestaltung der Erfindung ist die X-Linearachse der Handhabungseinrichtung gleichgerichtet und/oder parallel zu einer Längsachse der Fahrzeugkarosserie, die bevorzugt auf der Fertigungslinie angeordnet ist und insbesondere in die Verfahrrichtung befördert wird. Alternativ oder optional ergänzend verläuft die Y-Linearachse und/oder die Y-Linear-Rotationsachse gleichgerichtet und/oder parallel zu einer Querachse der Fahrzeugkarosserie.

Im Rahmen der Erfindung umfasst die Montagestation eine Bereitstellungsposition für die Fahrzeugscheibe. Optional kann die Handhabungseinrichtung die Fahrzeugscheibe in der Bereitstellungsposition greifen. Vorzugsweise ist hierfür in der Bereitstellungsposition eine Bereitstellungseinrichtung angeordnet, die z.B. als ein Bereitstellungstisch ausgebildet ist, auf dem mehrere zu montierende Fahrzeugscheiben zum Greifen durch die Handhabungseinrichtung bereitgestellt sind.

Eine bevorzugte Umsetzung der Erfindung sieht vor, dass die Montagestation eine Montageposition aufweist, in der die Fahrzeugscheibe zur Vor- und/oder Endmontage durch den Werker angeordnet ist. Bevorzugt befindet sich die Montageposition direkt an der Fahrzeugkarosserie, die auf der Fertigungslinie angeordnet ist. Insbesondere ist die Montageposition durch den Karosserieabschnitt festgelegt, an dem die Fahrzeugscheibe montiert wird.

Möglich im Rahmen der Erfindung ist, dass die Montagestation eine Sicherheitszone für den Werker aufweist. Bevorzugt ist die Sicherheitszone ein räumlich begrenzter Bereich, der sich, insbesondere in einem Aktionsbereich der Robotervorrichtung, zwischen der Bereitstellungsposition und der Montageposition erstreckt. Optional ergänzend umfasst die Montagestation eine Überwachungseinrichtung und eine Steuereinrichtung, wobei die Überwachungseinrichtung zur Überwachung der Sicherheitszone ausgebildet ist. Die Steuereinrichtung ist insbesondere zur Ansteuerung des aktiven oder gesicherten Zustands der Robotervorrichtung ausgebildet.

Vorzugsweise überwacht die Überwachungseinrichtung ein Betreten oder eine Annäherung der Sicherheitszone durch den Werker, wenn die Robotervorrichtung den aktiven Zustand aufweist. Optional ergänzend setzt die Steuereinrichtung die Robotervorrichtung in den gesicherten Zustand, wenn der Werker die Sicherheitszone betritt oder sich dieser nähert. Dadurch kann der Werker in vorteilhafter Weise vor einer Kollision mit der Robotervorrichtung geschützt werden.

In einer besonders bevorzugten Umsetzung der Erfindung ist die Robotervorrichtung in den gesicherten Zustand gesetzt, wenn sich die Handhabungseinrichtung mit der gegriffenen Fahrzeugscheibe in der Montageposition befindet. Dadurch kann sich der Werker der Handhabungseinrichtung nähern und diese benutzen, um die Fahrzeugscheibe an dem Karosserieabschnitt vor- und/oder end zu montieren.

Einen weiteren Gegenstand der Erfindung bildet ein Verfahren zur Montage der Fahrzeugscheibe an dem Karosserieabschnitt der Fahrzeugkarosserie in der Montagestation mit der Handhabungseinrichtung nach der bisherigen Beschreibung und/oder nach einem der Ansprüche 1 bis 10.

Im Rahmen des Verfahrens wird die Halteeinrichtung, insbesondere in der Montageposition und zur Vor- und Endmontage durch den Werker, in einem ersten translatorischen Freiheitsgrad entlang der Xr-Linearachse in die Xr-Richtung relativ zur Schnittstelle und parallel zur Scheibenebene bewegt. In einem zweiten translatorischen Freiheitsgrad wird die Halteeinrichtung im Rahmen des Verfahrens entlang der Y-Linearachse und/oder der Y-Linear-Rotationsachse in die Y-Richtung relativ zur Schnittstelle und parallel zur Scheibenebene bewegt.

In einem bevorzugten Verfahrensschritt bewegt die Robotereinrichtung die Handhabungseinrichtung im gekoppelten Zustand zu der Bereitstellungsposition. Vorzugsweise übernimmt die Handhabungseinrichtung die Fahrzeugscheibe in der Bereitstellungsposition, indem sie diese mit der mindestens einen Greifereinrichtung greift. Insbesondere bewegt die Robotervorrichtung anschließend die Handhabungseinrichtung mit der gegriffenen Fahrzeugscheibe durch die Sicherheitszone zu der Montageposition. Dort positioniert die Robotereinrichtung die Fahrzeugscheibe in der Montageposition zur Vor- und/oder Endmontage durch den Werker. Insbesondere kann im Vergleich zu einer konventionellen Handhabungsvorrichtung, bei der der Transport der Fahrzeugscheibe manuell und nicht durch die Robotervorrichtung erfolgt, Arbeitszeit des Werkers für den Transport der Fahrzeugscheibe zum Karosserieabschnitt eingespart werden. Weiterhin ist der Transport durch die Robotervorrichtung eine Arbeitserleichterung für den Werker.

Im Rahmen des Verfahrens ist es bevorzugt, dass die Sicherheitszone während der Überführung der Fahrzeugscheibe von der Bereitstellungsposition in die Montageposition aktiv gesetzt wird. Bei aktivierter Sicherheitszone wird die Robotervorrichtung in den gesicherten Zustand gesetzt, wenn der Werker die Sicherheitszone betritt oder sich dieser nähert. Insbesondere übermittelt die Überwachungseinrichtung ein Signal an die Steuereinrichtung, wenn sich der Werker der Sicherheitszone nähert oder in diese eintritt. Daraufhin steuert die Steuereinrichtung das Setzen der Robotereinrichtung in den gesicherten Zustand an.

Optional ergänzend wird die Robotervorrichtung bei aktivierter Sicherheitszone in den gesicherten Zustand gesetzt, wenn die Handhabungseinrichtung in der Montageposition angeordnet ist. Vorzugsweise positioniert die Robotervorrichtung die Handhabungseinrichtung in der Montageposition so, dass die Fahrzeugscheibe in einem Abstand von maximal 40 Millimetern, vorzugsweise von maximal 30 Millimetern von dem Karosserieabschnitt beanstandet ist. Dadurch wird erreicht, dass der Werker die Handhabungseinrichtung selbst nur weniger Millimeter zum Karosserieabschnitt bewegen muss. Ein benötigter Kraftaufwand für den Werker kann in vorteilhafter Weise reduziert werden.

Wenn der Werker die Vor- und Endpositionierung mit der Handhabungseinrichtung vornimmt, kann in vorteilhafter Weise auf teure und fehleranfällige Sichtsysteme, sogenannte Vision Systems, verzichtet werden. Derartige Vision Systems werden üblicherweise verwendet, wenn die Vor- und/oder Endmontage durch die Robotervorrichtung vorgenommen wird.

Im Rahmen des Verfahrens ist es bevorzugt, dass die Robotervorrichtung eine Klebestation anfährt, die zwischen der Bereitstellungsposition und der Montageposition angeordnet ist. Beispielsweise umfasst die Klebestation eine Spritzdüseneinrichtung zum Aufbringen eines Klebstoffes auf die Fahrzeugscheibe. Insbesondere wird der Klebstoff in der Klebestation zum späteren Verkleben mit dem Karosserieabschnitt auf die Fahrzeugscheibe aufgebracht. Das Aufbringen kann z.B. dadurch erfolgen, dass die Robotervorrichtung die Beförderung der Fahrzeugscheibe unterbricht und diese in Richtung der Spritzdüseneinrichtung positioniert, wobei die Spritzdüseneinrichtung den Klebstoff auf die Fahrzeugscheibe aufbringt.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: eine Handhabungseinrichtung für eine Robotervorrichtung zur Montage einer Fahrzeugscheibe auf einem Karosserieabschnitt einer Fahrzeugkarosserie in einer Montagestation;
- Figur 2: eine Draufsicht von oben auf eine Montagestation, wobei die Handhabungseinrichtung in einer Bereitstellungsposition angeordnet ist;
- Figur 3: die Montagestation aus Fig. 2, wobei die Handhabungseinrichtung in einer Montageposition angeordnet ist.

Einander entsprechende oder gleiche Teile sind in den Figuren jeweils mit den gleichen Bezugszeichen versehen.

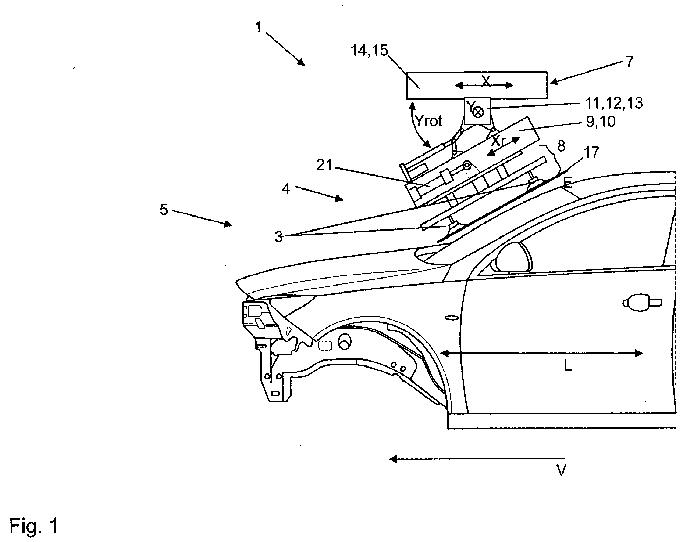

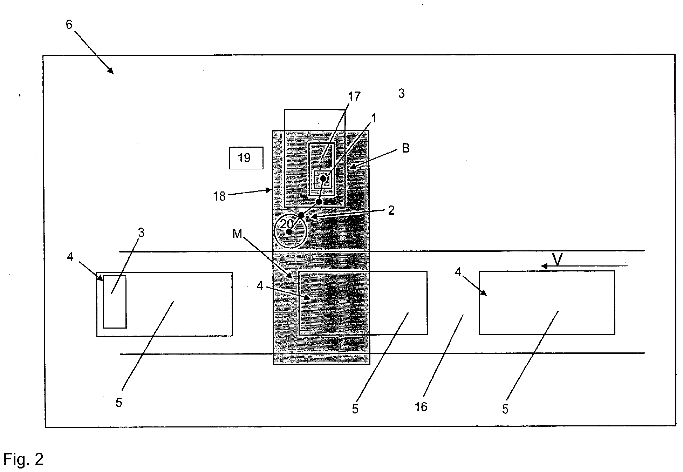

Figur 1 zeigt eine Handhabungseinrichtung 1 für eine Robotervorrichtung 2 (Fig. 2-3) zur Montage einer Fahrzeugscheibe 17 auf einem Karosserieabschnitt 4 einer Fahrzeugkarosserie 5 (Fig. 2-3) in einer Montagestation 6 (Fig. 2-3).

Die Handhabungsvorrichtung 1 weist eine Schnittstelle 7 auf, über die sie mit der Robotervorrichtung 2 gekoppelt werden kann und in einen gekoppelten Zustand (K) überführbar ist. Die Fahrzeugkarosserie 5 ist als eine Karosserie eines PKWs ausgebildet. Der Karosserieabschnitt 4 ist in einem Frontscheibenbereich der Fahrzeugkarosserie 5 angeordnet. Alternativ kann der Karosserieabschnitt 4 auch in einem Heckscheibenbereich der Fahrzeugkarosserie 5 angeordnet sein. Die Fahrzeugkarosserie 5 ist auf einer Fertigungslinie 15 (Fig. 2) der Montagestation 6, insbesondere auf einem Transport- und/oder Förderband, angeordnet und wird von diesem in eine Verfahrrichtung X verfahren.

Die Handhabungseinrichtung 1 weist eine Halteeinrichtung 8 mit mindestens einer Greifereinrichtung 3 auf. Die mindestens eine Greirfereinrichtung 3 ist als mindestens ein Saugnapf ausgebildet. Die Fahrzeugscheibe 17 kann so durch Erzeugen eines Vakkums von der Greifereinrichtung 3 gegriffen und gehalten werden. Im gehaltenen Zustand bildet die Fahrzeugscheibe 17 eine Scheibenebene E.

Die Handhabungseinrichtung 1 weist eine Xr-Linearachse 9 auf. Die Xr-Linearachse 9 umfasst ein erstes Verschiebepaar mit einer ersten Führungsschiene (nicht gezeigt) und einem ersten Wagen 10. Der Wagen 10 ist auf der ersten Führungsschiene entlang der Xr-Linearachse 9 in einem ersten translatorischen Freiheitsgrad in einer Xr-Richtung Xr verschiebbar.

Die Halteeinrichtung 8 ist an dem ersten Wagen 10 angeordnet und dadurch relativ zur Schnittstelle 7 und parallel zu der Scheibenebene E in die Xr-Richtung Xr bewegbar

Die Handhabungseinrichtung 1 weist eine Y-Linearachse 11 auf, die als eine Y-Linear-Rotationsachse 12 ausgebildet ist. Insbesondere ist die Y-Linear-Rotationsachse 12 als eine Welle ausgebildet, die in einer Yrot-Richtung rotieren kann. Die Y-Linearsachse 11 verläuft gleichgerichtet zu einer Quererstreckung der Fahrzeugkarosserie 5.

Die Y-Linearachse 11 weist ein zweites Führungspaar mit einer zweiten Führungsschiene (nicht gezeigt) und einem zweiten Wagen 13 auf. Der zweite Wagen 13 ist auf der zweiten Führungsschiene entlang der Y-Linearachse 11 in einem zweiten translatorischen Freiheitsgrad in einer Y-Richtung Y verschiebbar.

Die Xr-Linearachse 9 ist in einer kinematischen Kette mit der Y-Linearachse 11 und/oder mit der Y-Linear-Rotationsachse 12 angeordnet. Insbesondere ist die erste Führungsschiene mit dem zweiten Wagen 13 der Y-Linearachse verbunden und mit diesem in die Y-Richtung verschiebbar. Dadurch ist die an dem ersten Wagen 10 der Xr-Linearachse 9 angeordnete Halteeinrichtung 8 relativ zur Schnittstelle 7 und parallel zur Scheibenebene E in die Y-Richtung bewegbar.

Weiterhin ist die erste Führungsschiene und/oder die Xr-Linearachse 9 rotierbar mit der Y-Linear-Rotationsachse 12 gekoppelt, sodass die erste Führungsschiene und/oder die Xr-Linearachse 9 um die Y-Linear-Rotationsachse 12 rotierbar ist. Zugleich ist die Halteeinrichtung 8 um die Yr-Linear-Rotationsachse 12 in die Yrot-Richtung Yrot rotierbar. Dadurch kann die Fahrzeugscheibe an verschiedene benötigte Einbauwinkel für unterschiedlicher Fahrzeugkarosserietypen angepasst werden, insbesondere entsprechend positioniert und ausgerichtet werden. Dadurch kann die Montage der Fahrzeugschiebe flexibilisiert werden. Teure Umrüstzeiten können dadurch vermieden werden.

Die Handhabungseinrichtung 1 umfasst eine X-Linearachse 14 mit einem dritten Verschiebepaar, das eine dritte Führungsschiene (nicht gezeigt) und einen dritten Wagen 15 aufweist. Der dritte Wagen 15 ist auf der dritten Führungsschiene in einem dritten translatorischen Freiheitsgrad in eine X-Richtung X verschiebbar. Die X-Richtung verläuft gleichgerichtet zu einer Längsrichtung L der Fahrzeugkarosserie 5.

Die Y-Linearachse 11 und/oder die Y-Linear-Rotationsachse 12 ist mit der X-Linearachse 14 in einer kinematischen Kette angeordnet. Insbesondere ist die zweite Führungsschiene mit dem dritten Wagen 15 der X-Linearachse 14 verbunden und mit diesem in die X-Richtung X verschiebbar. Dadurch kann die Halteeinrichtung 8 auch relativ zur Schnittstelle 7 in die X-Richtung X bewegt werden. Insbesondere im Rahmen der Fließfertigung ist dies von Vorteil, da Bewegungen oder Nachlaufwege bei einem Stopp in der Fertigungslinie durch die Bewegung in die X-Richtung ausgeglichen werden können.

Die Handhabungseinrichtung 1 weist mindestens eine Gewichtsregulierungseinrichtung 21 auf, die z.B. als mindestens ein Zylinder ausgebildet ist. Beispielsweise wird durch die Gewichtsregulierungseinrichtung 21 ein Gegengewicht zum Gewicht der Fahrzeugscheibe 17 erzeugt.

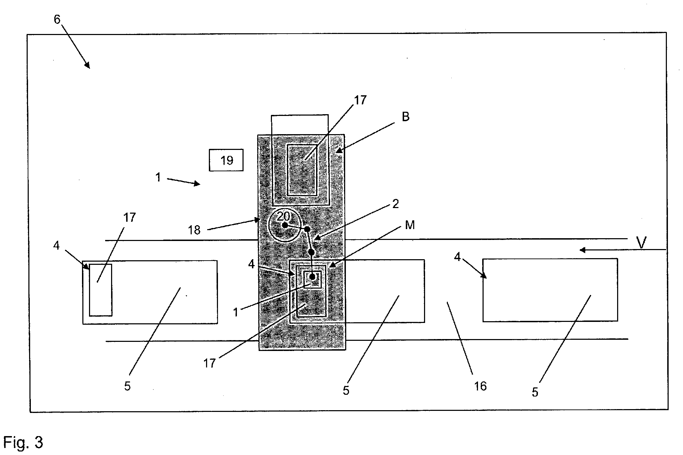

Die Figuren 2 und 3 zeigen eine Draufsicht von oben auf die Montagestation 6. Die Montagestation 6 umfasst die Handhabungseinrichtung 1, die Fahrzeugscheibe 17, die Robotervorrichtung 2, die Fahrzeugkarosserie 5 und die Fertigungslinie 16.

Die Montagestation 6 weist eine Bereitstellungsposition B und eine Montageposition M auf. In der Bereitstellungsposition B wird die zu montierende Fahrzeugscheibe 17 zum Greifen durch die Handhabungseinrichtung 1 bereitgestellt. In der Montageposition M hält die Handhabungseinrichtung 1 die Fahrzeugscheibe 17 zur Vor- und/oder Endmontage durch den Werker an dem Karosserieabschnitt 4.

Zwischen der Bereitstellungsposition B und der Montageposition M ist eine Sicherheitszone 18 angeordnet. Die Montagestation 6 weist eine Überwachungseinrichtung 19 zur Überwachung der Sicherheitszone 18 und eine Steuereinrichtung 20 zur Ansteuerung der Robotervorrichtung 2 auf.

Die Robotereinrichtung 2 ist als ein Knick- und/oder Gelenkarmroboter ausgebildet. Als Knick- und/oder Gelenkarmroboter kann die Robotereinrichtung 2 Schwenk- und/oder Rotationsbewegungen innerhalb mindestens zweiter Freiheitsgrade ausführen.

Die Handhabungseinrichtung 1 ist als ein Werkzeug mit der Robotervorrichtung 2 gekoppelt. Insbesondere ist die Handhabungsvorrichtung 1 an der Robotervorrichtung 2 angeordnet, wobei die Robotervorrichtung 2 die Handhabungseinrichtung 1 mit sich führen kann.

Gemäß Figur 2 bewegt die Robotervorrichtung 2 die Handhabungseinrichtung 1 zu der Bereitstellungsposition B, in der die Handhabungseinrichtung 1 die Fahrzeugscheibe 17 greift. Anschließend befördert die Robotervorrichtung 2 die Handhabungseinrichtung 1 mit der Fahrzeugscheibe 17 durch die Sicherheitszone 18 zu der Montageposition M, wie es in Figur 3 gezeigt ist. Möglich ist, dass zwischen die Bereitstellungsposition B und die Montageposition M eine Klebestation K zwischengeschaltet ist, auf der ein Klebstoff auf die Fahrzeugscheibe 17 zum späteren Verkleben mit dem Karosserieabschnitt 4 aufgebracht wird.

In der Montageposition M gemäß Figur 3 ist die Handhabungseinrichtung 1 durch die Robotervorrichtung 2 so positioniert, dass die Fahrzeugscheibe 17 maximal 40 Millimeter, insbesondere maximal 30 Millimeter vom Karosserieabschnitt 4 beabstandet ist. Ein Werker verwendet die Handhabungseinrichtung 1, um die Fahrzeugscheibe 17 am Karosserieabschnitt 4 vor- und/oder end zu positionieren und optional ergänzend feinzujustieren.

Hierfür bewegt der Werker die Handhabungseinrichtung 1 zum Karosserieabschnitt 4 und setzt die Fahrzeugscheibe 17, gegebenenfalls unter Zuhilfenahme mindestens einer Messlehre oder mindestens eines Abstandshalters, auf den Karosserieabschnitt 4. Die mindestens eine Gewichtsregulierungseinrichtung 21 (Fig. 1) dient als Gegengewicht zum Gewicht der Fahrzeugscheibe 17 und erleichtert dem Werker dadurch das Bewegen und Führen der Handhabungseinrichtung 1. Somit muss der Werker bei der Montage weniger Kraft aufwenden.

Dadurch dass die Halteeinrichtung 8 (Fig. 1) gemäß der Beschreibung in Fig. 1 in bis zu vier Freiheitsgraden beweglich ist, kann die Endmontage, insbesondere Feinjustierung der Fahrzeugscheibe 17 am Karosserieabschnitt 4 durch den Werker erfolgen. Auf eine automatisierte Montage durch die Robotervorrichtung 2 und auf dafür benötigte hochpreisige Sichtsysteme, sogenannte Vision Systems, kann in vorteilhafter Weise verzichtet werden.

Die Robotervorrichtung 2 kann von der Steuereinrichtung 20 von einem aktiven Zustand in einen gesicherten Zustand gesetzt werden. Im aktiven Zustand kann sich die Robotereinrichtung 2 in der Sicherheitszone 18 bewegen und die Handhabungseinrichtung 1 von der Bereitstellungsposition B zur Montageposition M befördern. Im gesicherten Zustand ist die Robotervorrichtung 2 in ihrer Bewegungsgeschwindigkeit reduziert. Insbesondere ist die Geschwindigkeit an eine Liniengeschwindigkeit der Fertigungslinie 16 angepasst. Hierbei bewegt sich die Robotervorrichtung 2 gemeinsam mit der Handhabungseinrichtung 1 und der gegriffenen Fahrzeugscheibe 17 stetig in die Verfahrrichtung V weiter und hält dabei nicht an. Eine Geschwindigkeit, insbesondere Taktung der Bereitstellung der Fahrzeugkarosserie 5 auf der Fertigungslinie 16 und der Fahrzeugscheibe 17 durch die an der Robotervorrichtung 2 angeordnete Handhabungseinrichtung 1, ist aufeinander abgestimmt. Alternativ ist es möglich, dass die Robotervorrichtung 2 im gesicherten Zustand bewegungsunfähig gesetzt ist. Dies ist insbesondere der Fall, wenn die Fertigungslinie 16 zur Endmontage der Fahrzeugscheibe 17 am Karosserieabschnitt 4 stoppt.

Bei einer Annäherung des Werkers an die Sicherheitszone 18 und/oder bei einem Eintreten des Werkers in die Sicherheitszone 18 erfasst dies die Überwachungseinrichtung 19, woraufhin die Steuereinrichtung 20 die Robotervorrichtung 2 in den gesicherten Zustand setzt. Dadurch ist der Werker vor einer Kollision mit der Robotervorrichtung 2 geschützt. Die Robotervorrichtung 2 wird auch dann in den gesicherten Zustand gesetzt, wenn die Handhabungseinrichtung 1 mit der Fahrzeugscheibe 17 in der Montageposition M angeordnet ist.

Während vorstehend mindestens ein Ausführungsbeispiel detailliert offenbart wurde, ist es anzuerkennen, dass eine Vielzahl von erfindungsgemäßen Variationen existieren. Es ist ebenfalls anzuerkennen, dass das mindestens eine Ausführungsbeispiel nur beispielhaften Charakter hat und keine Begrenzung des Schutzumfangs, der Anwendungsgebiete oder der Konfiguration darstellt. Vielmehr soll die vorliegende Offenbarung einen angenehmen Fahrplan zur Umsetzung mindestens eines Ausführungsbeispiels sein. Somit sollte es anzuerkennen sein, dass verschiedene Variationen der Funktion oder der Anordnung der Elemente des mindestens einen Ausführungsbeispiels umgesetzt werden können, ohne den Umfang zu verlassen, der durch die Ansprüche und deren rechtmäßigen Äquivalente vorgegeben ist.

### Bezugszeichenliste:

- 1: Handhabungsvorrichtung
- 2: Robotereinrichtung
- 3: Greifeinrichtung
- 4: Karosserieabschnitt
- 5: Fahrzeugkarosserie
- 6: Montagestation
- 7: Schnittstelle
- 8: Halteeinrichtung
- 9: Xr-Linearachse
- 10: erster Wagen
- 11: Y-Linearachse
- 12: Y-Linear-Rotationsachse
- 13: zweiter Wagen
- 14: X-Linearachse
- 15: dritter Wagen
- 16: Fertigungslinie
- 17: Fahrzeugscheibe
- 18: Sicherheitszone
- 19: Überwachungseinrichtung
- 20: Steuereinrichtung

- B: Bereitstellungsposition
- L: Fahrzeuglängsrichtung
- M: Montageposition
- V: Verfahrrichtung
- X: X-Richtung
- Xr: Xr-Richtung
- Y: Y-Richtung
- Yrot: Yrot-Richtung

## Patentansprüche

1. Handhabungseinrichtung (1) für eine Robotervorrichtung (2) zur Montage einer Fahrzeugscheibe (17) an einen Karosserieabschnitt (4) einer Fahrzeugkarosserie (5) in einer Montagestation (6),
wobei die Handhabungseinrichtung (1) eine Schnittstelle (7) zur Kopplung der Handhabungseinrichtung (1) mit der Robotervorrichtung (2) aufweist,
wobei die Handhabungseinrichtung (1) eine Halteeinrichtung (8) zum Halten der Fahrzeugscheibe (17) in einer Scheibenebene (E) aufweist,
wobei die Handhabungseinrichtung (1) eine Xr-Linearachse (9) und eine Y-Linearachse (11) aufweist,
wobei die Halteeinrichtung (8) in einem ersten translatorischen Freiheitsgrad entlang der Xr-Linearachse (9) in eine Xr-Richtung (Xr) relativ zur Schnittstelle (7) und parallel zur Scheibenebene (E) bewegbar ist und
wobei die Halteeinrichtung (8) in einem zweiten translatorischen Freiheitsgrad entlang der Y-Linearachse (11) in eine Y-Richtung (Y) relativ zur Schnittstelle (7) und parallel zur Scheibenebene (E) bewegbar ist.

2. Handhabungseinrichtung (1) nach Anspruch 1, wobei die Halteeinrichtung (8) an der Xr-Linearachse (9) angeordnet und durch diese bewegbar ist.

3. Handhabungseinrichtung (1) nach Anspruch 1 oder 2, wobei die Y-Linearachse (11) als eine Y-Linear-Rotationsachse (12) ausgebildet ist, wobei die Halteeinrichtung (8) in einem rotatorischen Freiheitsgrad um die Y-Linear-Rotationsachse (12) in eine Yrot-Richtung (Yrot) bewegbar ist.

4. Handhabungseinrichtung (1) nach einem der vorhergehenden Ansprüche, wobei die Xr-Linearachse (9) in einer kinematischen Kette mit der Y-Linearachse (11) und/oder mit der Y-Linear-Rotationsachse (12) steht.

5. Handhabungseinrichtung (1) nach einem der vorhergehenden Ansprüche, wobei die Halteeinrichtung (8) eine X-Linearachse (14) aufweist.

6. Handhabungseinrichtung (1) nach Anspruch 5, wobei die Halteeinrichtung (8) in einem dritten translatorischen Freiheitsgrad entlang der X-Linearachse (14) in eine X-Richtung (X) relativ zur Schnittstelle (7) bewegbar ist.

7. Handhabungseinrichtung (1) nach Anspruch 5 oder 6, wobei die Y-Linearachse (11) und/oder die Y-Linear-Rotationsachse (12) mit der X-Linearachse (14) in einer kinematischen Kette verbunden ist.

8. Handhabungseinrichtung (1) nach einem der Ansprüche 5 bis 7, wobei die Y-Linearachse (11) in einer Draufsicht von oben auf die Handhabungseinrichtung (1) rechtwinklig oder senkrecht zur X-Linearachse (14) verläuft.

9. Handhabungseinrichtung (1) nach einem der Ansprüche 5 bis 8 umfasst, wobei Xr-Linearachse (9) in Abhängigkeit von einem Rotationsgrad um die Y-Linear-Rotationsachse (12) winklig oder gleichgerichtet zur X-Linearachse (14) verläuft.

10. Handhabungseinrichtung (1) nach einem der vorhergehenden Ansprüche, wobei die Xr-Linearachse (9) ein erstes Verschiebepaar aufweist, wobei die Y-Linearachse (11) ein zweites Verschiebepaar aufweist und/oder wobei die X-Linearachse (13) ein drittes Verschiebepaar aufweist, wobei das erste, zweite und/oder dritte Verschiebepaar jeweils eine Führungsschiene und einen auf der Führungsschiene verschiebbaren Wagen (10, 13, 14) umfasst.

11. Montagestation (6) mit der Handhabungseinrichtung (1) nach einem der vorhergehenden Ansprüche.

12. Montagestation (6) nach Anspruch 11, wobei die Montagestation (6) eine Robotervorrichtung (2), eine Fahrzeugkarosserie (5), eine Fahrzeugscheibe (17) und eine Fertigungslinie (15) umfasst, wobei die Fahrzeugkarosserie (5) auf der Fertigungslinie (15) angeordnet ist, wobei die X-Linearachse (14) der Handhabungseinrichtung (1) gleichgerichtet und/oder parallel zu einer Längsachse (L) der Fahrzeugkarosserie (5) verläuft und/oder wobei die Y-Linearachse (11) und/oder die Y-Linear-Rotationsachse (12) parallel zu einer Querachse der Fahrzeugkarosserie (5) verläuft.

13. Montagestation (6) nach Anspruch 11 oder 12, wobei die Montagestation (6) eine Bereitstellungsposition (B) und eine Montageposition (M) aufweist, wobei die Fahrzeugscheibe (17) in der Bereitstellungsposition (B) zum Greifen durch die Handhabungseinrichtung (1) bereitgestellt ist und wobei die Fahrzeugscheibe (17) in der Montageposition (M) zur Vor- und/oder Endmontage durch den Werker positioniert ist, wobei zwischen der Bereitstellungsposition (B) und der Montageposition (M) eine Sicherheitszone (18) für einen Werker angeordnet ist, wobei die Montagestation (6) eine Überwachungseinrichtung (19) zur Überwachung der Sicherheitszone (18) aufweist.

14. Verfahren zur Montage einer Fahrzeugscheibe (17) an einem Karosserieabschnitt (4) einer Fahrzeugkarosserie (5) in einer Montagestation (6) nach einem der Ansprüche 11 bis 13, mit einer Handhabungseinrichtung (1), wobei die Handhabungseinrichtung (1) eine Schnittstelle zur Kopplung der Handhabungseinrichtung (1) mit der Robotervorrichtung (2) aufweist, wobei die Handhabungseinrichtung (1) eine Halteeinrichtung (8) zum Halten der Fahrzeugscheibe (17) in einer Scheibenebene (E) aufweist, wobei die Handhabungseinrichtung (1) eine Xr-Linearachse (9) mit einem ersten Verschiebepaar aufweist und wobei die Handhabungseinrichtung (8) eine Y-Linearachse (11) mit einem zweiten Verschiebepaar aufweist, wobei die Halteeinrichtung (8) in einem ersten translatorischen Freiheitsgrad entlang der Xr-Linearachse (9) in eine Xr-Richtung (Xr) relativ zur Schnittstelle (7) und parallel zur Scheibenebene (E) bewegt wird und wobei die Halteeinrichtung (8) in einem zweiten translatorischen Freiheitsgrad entlang der Y-Linearachse (11) und/oder der Y-Linear-Rotationssachse (12) in eine Y-Richtung (Y) relativ zur Schnittstelle (7) und parallel zur Scheibenebene (E) bewegt wird.

15. Verfahren nach Anspruch 14, wobei die Robotervorrichtung (2) die Fahrzeugscheibe (17) mit der gekoppelten Handhabungseinrichtung (1) in der Bereitstellungsposition (B) übernimmt und zur Vor- und/oder Endmontage durch den Werker in der Montageposition (V) positioniert, wobei die Robotervorrichtung (2) bei aktivierter Sicherheitszone (18) und bei einem Betreten der Sicherheitszone (18) durch den Werker in einen gesicherten Zustand gesetzt wird.
